# EUROPÄISCHE PATENTSCHRIFT

(11) **EP 0 692 015 B1**
(45) Veröffentlichungstag und Bekanntmachung des Hinweises auf die Patenterteilung: **02.01.1997**
(21) Anmeldenummer: 94911940.8
(22) Anmeldetag: 22.03.1994
(51) Int. Cl.: C11D 3/37, C11D 3/08, C11D 3/10, C11D 3/04, A23C 7/02

(54) **VERWENDUNG VON POLYASPARAGINSÄURE IN REINIGUNGSMITTELFORMULIERUNGEN**
USE OF POLYASPARAGINIC ACID IN CLEANING PRODUCT FORMULATIONS
UTILISATION D'ACIDE POLYASPARAGINIQUE DANS DES FORMULATIONS DE PRODUITS DE NETTOYAGE

(30) Priorität: 03.04.1993 DE 4310995
(43) Veröffentlichungstag der Anmeldung: 17.01.1996
(73) Patentinhaber: BASF AKTIENGESELLSCHAFT, 67056 Ludwigshafen (DE)
(72) Erfinder: POTTHOFF-KARL, Birgit, D-67061 Ludwigshafen (DE); KRONER, Matthias, D-67304 Eisenberg (DE); SCHORNICK, Gunnar, D-67271 Neuleiningen (DE)
(86) Internationale Anmeldenummer: EP9400883
(87) Internationale Veröffentlichungsnummer: WO9423004

(56) Entgegenhaltungen:
- EP-A- 0 454 126
- EP-A- 0 561 452
- DE-A- 1 802 921
- DE-A- 3 626 672

## Beschreibung

Die Erfindung betrifft die Verwendung von Polyasparaginsäure und Kondensaten der Asparaginsäure sowie von Alkali- und Ammoniumsalzen dieser Kondensate und der Polyasparaginsäure in Reinigungsmittelformulierungen für die Apparatereinigung in Betrieben der Getränke- und Lebensmittelindustrie sowie Reinigungsmittelformulierungen, die Polyasparaginsäure und Kondensate der Asparaginsäure enthalten.

Aus der US-A-3 052 655 ist die thermische Polymerisation von Asparaginsäure mit anderen Aminosäuren wie Glutaminsäure, bei Temperaturen von 160 bis 210°C bekannt. Die Polykondensation kann gegebenenfalls in Gegenwart von Phosphorsäure durchgeführt werden, wobei molare Mengen Phosphorsäure auf die bei der Kondensation eingesetzten Aminosäuren angewendet werden können.

Aus der DE-A-2 032 470 ist die thermische Polykondensation von Asparaginsäure unter vermindertem Druck bei Temperaturen von 170 bis 200°C bekannt. Die Polykondensation kann gegebenenfalls in Gegenwart von Phosphorsäure durchgeführt werden. Die Umsetzungsprodukte der so erhältlichen Polyaspartimide mit Alkanoliminen werden als Blutplasmaexpander eingesetzt.

In der US-A-4 534 881 wird die Inhibierung von anorganischen oder biologischen Calciumcarbonatausfällungen durch Polyaspartat, Polyglutamat und Copolykondensaten mit anderen Aminosäuren beschrieben. Die Polyaminosäuren werden beispielsweise in Meerwasseraufbereitungsanlagen oder Kühlkreisläufen als Scaleinhibitor verwendet.

Durch thermische Polykondensation von Maleinsäuremonoammoniumsalz bei 120 bis 150°C entsteht gemäß der Lehre der DE-A-3 626 672 Polyasparaginsäure, die in der sauren Form Ablagerungen der Härtebildner des Wassers verhindert und Ablagerungen dieser Art wieder auflösen kann. Das Polyaspartat kann in Geschirrspülmaschinen das Mattwerden von Glas verhindern. Die K-, Mg- und Ca-Salz der Polyasparaginsäure können auch als Düngemittel verwendet werden.

Aus der DE-A-2 253 190 ist bekannt, das mit langkettigen Alkylaminen modifizierte Polyasparaginsäuren als Tenside in Waschmitteln verwendet werden.

Aus der DE-A-4 023 463 ist ein Verfahren zur Herstellung von Polyasparaginsäure in zwei Stufen bekannt, wobei man Asparaginsäure zunächst mit Phosphorsäure bei Temperaturen bis zu 150°C unter vermindertem Druck kondensiert, dann das Reaktionsgemisch mechanisch zerkleinert und nachkondensiert. Aus den Kondensaten werden durch polymeranaloge Umsetzungen beispielsweise Plasmaexpander oder durch Umsetzung mit Aminen Polyasparaginsäurederivate hergestellt, die in pharmazeutischen und lebensmitteltechnischen Zubereitungen verwendet werden. Diese Polymeren sind filmbildend.

Aus der EP-A-0 454 126 und der EP-A-0 511 037 ist die Verwendung von Polyasparaginsäure als Builder in Waschmittelformulierungen bekannt. Gemäß der Lehre der WO-A-92/15535 werden Polyasparaginsäuren mit Molmassen von 1000 bis 5000 als Dispergiermittel verwendet.

Aus der DE-A-1 802 921 ist ein alkalisches Reinigungsmittel für Milch- und Rahmerhitzer sowie für Verdampfer bekannt, das Nitrilotriessigsäure, Ethylendiamintetratraessigsäure, Cyclohexandiamintetraessigsäure sowie deren Alkali-, Amonium- oder Aminsalze sowie Mischungen dieser Verbindungen, Etalkalien, waschaktive Substanzen, Alkalisalze und Glukonsäure oder deren Salze enthält. Diese Reinigungsmittel werden beispielsweise in 1,5 - 2,5%iger Lösung und Temperaturen von etwa 50 - 90°C zum Entfernen der Verunreinigungen in den genannten Vorrichtungen eingesetzt.

Aus der nicht vorveröffentlichten DE-Patentanmeldung

P 42 40 695.1 ist die Verwendung von Iminodiessigsäurederivaten als Komplexbildner oder Gerüststoff in alkalischen Reinigungsmittelformulierungen für die Getränke- und Nahrungsmittelindustrie bekannt.

Der vorliegenden Erfindung liegt die Aufgabe zugrunde, eine weitere Reinigungsmittelformulierung für die Apparatereinigung in Betrieben der Getränke- und Lebensmittelindustrie zur Verfügung zu stellen.

Die Aufgabe wird erfindungsgemäß gelöst mit der Verwendung von Polyasparaginsäure und Kondensaten der Asparaginsäure, die bis zu 40 Mol-% andere Aminosäuren einkondensiert enthalten, sowie von Alkali- und Ammoniumsalzen dieser Kondensate und der Polyasparaginsäure in Reinigungsmittelformulierungen für die Apparatereinigung in Betrieben der Getränke- und Lebensmittelindustrie.

Gegenstand der Erfindung sind außerdem wäßrige Reinigungsmittelformulierungen für die Apparatereinigung in Betrieben der Getränke und Lebensmittelindustrie. Die Formulierungen sind dadurch gekennzeichnet, daß sie
(a) 0,05 bis 30 Gew.-% Polyasparaginsäure, Kondensate der Asparaginsäure, die bis zu 40 Mol-% andere Aminosäuren einkondensiert enthalten, Alkali- und Ammoniumsalzen dieser Kondensate und/oder der Polyasparaginsäure,
(b) 2 bis 50 Gew.-% Alkalimetallhydroxid, -carbonat, -silikat oder deren Mischungen und
(c) 1 bis 30 Gew.-% Tenside
enthalten.

Als Ausgangsmaterial für die Herstellung von Polyasparaginsäure und den Asparaginsäure einkondensiert enthaltenden Reaktionsprodukten kann L-, D- und DL-Asparaginsäure verwendet werden. DL-Asparaginsäure ist technisch leicht zugänglich, z.B. durch Umsetzung von Ammoniak mit Maleinsäure oder Fumarsäure unter Druck. L-Asparaginsäure kann beispielsweise durch asymmetrische L-Aspartase katalysierte Addition von Ammoniak an Fumarsäure hergestellt werden. Geeignete Mikroben für die industrielle Biokonversion von Fumarsäure in L-Asparaginsäure beinhalten mutierte Stämme von beispielsweise Pseudomonas, Brevibacterium flavum oder lactoferum. Die Mikroorganismen können bei der katalysierten Anlagerung von Ammoniak an Fumarsäure auf einer festen Phase immobilisiert werden. Die Produktion von L-Asparaginsäure kann somit ökonomisch und kontinuierlich in einem durchströmten Reaktor oder Rohr durchgeführt werden, vgl. Ullmanns Encyklopädie der technischen Chemie, 1985, Band A2, Seite 68. L-Asparaginsäure kann auch beispielsweise durch chemische oder enzymatische Hydrolyse von L-Asparagin hergestellt werden. L-Asparagin fällt als Nebenprodukt in der Zuckermelasse und bei der Verarbeitung von Kartoffeln an. Zur Herstellung der Polykondensate wird vorzugsweise L- und DL-Asparaginsäure eingesetzt. Besonders bevorzugt dient biotechnologisch hergestellte L-Asparaginsäure als Ausgangsmaterial zur Herstellung der Polyaspartate.

Außer den Kondensaten, die durch alleinige thermische Kondensation von Asparaginsäure erhältlich sind, kann man auch Cokondensate der Asparaginsäure mit bis zu 40 mol% anderen α-Aminosäuren als Belagsverhinderer einsetzen. Geeignete andere α-Aminosäuren und deren Halbamide sind beispielsweise Asparagin, Isoasparagin, Glutaminsäure, Glutamin, Lysin, Arginin, Histidin, Glycin, Alanin, Valin, Leucin, Isoleucin, 4-Aminobuttersäure, 2-Aminoisobuttersäure, Hydroxyaminosäuren, wie Serin, Threonin oder N-(Hydroxyethyl)glycin und Iminosäuren, wie Prolin, aromatische und heterocyclische Aminosäuren, wie Phenylalanin, Tyrosin, Anthranilsäure oder Tryptophan, sowie Schwefel enthaltende Aminosäuren, wie beispielsweise Cystin, Cystein und Methionin. Außerdem eignen sich als andere Aminosäuren zur Herstellung der Cokondensate die Aminodicarbonsäuren wie Diaminobuttersäure oder N-Methylaminosäuren, beispielsweise Sarkosin oder N-Methylalanin. Sämtliche Aminosäuren können in der L- und D-Konfiguration oder in Form von Mischungen aus L- und D-Aminosäuren in beliebigen Mischungsverhältnissen und als Racemate eingesetzt werden. Bevorzugt ist jedoch die Verwendung von L-Asparaginsäure als alleiniges Ausgangsmaterial zur Herstellung der thermischen Polyasparaginsäure.

Die Kondensation von Asparaginsäure erfolgt durch Tempern der Asparaginsäurekristalle bei Temperaturen von 140 bis 260°C, bevorzugt bei 190 bis 240°C, innerhalb eines Zeitraums bis zu 50 Stunden. Das Tempern wird vorzugsweise im Vakuum oder unter Inertgasatmosphäre durchgeführt. Die Kondensationsreaktion kann jedoch auch unter erhöhtem Druck oder in einem Gasstrom, z.B. Kohlendioxid, Luft, Stickstoff oder überhitztem Wasserdampf durchgeführt werden. Die Zeiten für die Kondensation sind von den gewählten Reaktionsbedingungen abhängig; sie liegen im allgemeinen zwischen 10 Minuten und 50 Stunden. Zur technischen Herstellung der Polykondensate kann man beispielsweise ein Trockenband, einen Schaufeltrockner, einen Taumeltrockner oder einen Wirbelschichttrockner einsetzen. Polykondensate mit niedrigem Molgewicht können auch in einem druckdicht verschlossenen Gefäß hergestellt werden, indem man das bei der Kondensation entstehende Wasser nicht oder nur teilweise entfernt.

Bei der Polykondensation der Asparaginsäure und der Cokondensation von Asparaginsäure mit anderen α-Aminosäuren kann man auch von den Salzen der Asparaginsäure oder den Salzen der anderen Aminosäuren ausgehen, wenn man bei der Polykondensation zusätzlich anorganische Säuren mitverwendet. Die Kondensationstemperaturen können dann gegenüber der rein thermischen Polykondensation der Asparaginsäure gesenkt werden. Ein weiterer Vorteil besteht darin, daß man praktisch nicht gefärbte Polykondensate erhält. Bei Einsatz von Salzen der Asparaginsäure und anorganischen Säuren betragen die Kondensationstemperaturen 120 bis 260°C und liegen vorzugsweise in dem Bereich von 140 bis 220°C, während die Reaktionszeiten etwa 1 Minute bis zu 10 Stunden betragen.

Als anorganische Säuren können alle Halogenwasserstoffsäuren verwendet werden. Bevorzugt wird Chlorwasserstoffsäure eingesetzt. Die Halogenwasserstoffsäuren können gasförmig oder in flüssigem Zustand verwendet werden. Bevorzugt finden konzentrierte wäßrige Lösungen von Chlorwasserstoffsäure Anwendung, in denen Asparaginsäure unter Bildung von Asparaginsäure-Hydrochlorid löslich ist. Es kann aber auch flüssiger oder gasförmiger Chlorwasserstoff zur Herstellung der Hydrochloride verwendet werden. Die wäßrigen Lösungen des Asparaginsäure-Hydrochlorids werden zur Trockene eingedampft und der Rückstand durch Erhitzen auf Temperaturen in dem oben angegebenen Bereich polykondensiert. Zum kontinuierlichen Eindampfen der wäßrigen Lösungen der Hydrochloride der Asparaginsäure kann beispielsweise ein Sprühtrockner oder Sprühwirbelschichttrockner verwendet werden. Die Polykondensation der Hydrochloride kann direkt im Anschluß an das Eindampfen oder auch zu einem späteren Zeitpunkt erfolgen. Geeignete Apparaturen für die Kondensation sind alle diejenigen Vorrichtungen, bei denen Feststoffe in Vakuum oder in einem Gasstrom auf Temperaturen bis zu 260°C erhitzt werden können. Im Verlauf der Polykondensation tritt der Chlorwasserstoff aus dem Kondensationsprodukt wieder aus. Der freigesetzte Chlorwasserstoff kann zurückgewonnen und erneut mit Asparaginsäure umgesetzt werden.

Die Polykondensation der Asparaginsäure bzw. ihre Cokondensation mit den anderen in Betracht kommenden Säuren kann auch mit anorganischen Säuren des Phosphors in verschiedenen Oxidationsstufen durchgeführt werden. Als anorganische Säuren des Phosphors setzt man bevorzugt Phosphorsäure und polymere Anhydride der Phosphorsäure (Polyphosphorsäuren) ein. Als Phosphorsäure wird bevorzugt technische, 75 bis 85 %ige wäßrige ortho-Phosphorsäure eingesetzt. Man kann jedoch auch 100 %ige ortho-Phosphorsäure oder meta-Phosphorsäure verwenden. Von den polymeren Anhydriden der Polyphosphorsäure eignen sich beispielsweise Diphosphorsäure (Pyrophosphorsäure), Triphosphorsäure und höhere Homologe. Die Polykondensation kann auch mit einem Überschuß an Phosphor enthaltenden Säuren durchgeführt werden. Diese Maßnahme kann in solchen Fällen von Vorteil sein, in denen höhermolekulare Polyaspartimide sehr hochviskose Lösungen in Phosphorsäuren bilden. Überstöchiometrische Mengen an Phosphorsäure können in solchen Fällen als Löse- und Verdünnungsmittel die Viskosität der entstehenden Polymerlösungen herabsetzen.

Die Umsetzung mit den Phosphorsäuren geschieht in der Weise, daß man Asparaginsäure und gegebenenfalls andere Aminosäuren in Phosphorsäure bei 20°C aufschlämmt und im Vakuum auf eine Temperatur von etwa 100°C erwärmt. Das mit der Phosphorsäure gegebenenfalls eingebrachte Wasser destilliert dabei ab, gleichzeitig löst sich die Asparaginsäure in der Phosphorsäure auf. Man erhält eine homogene Schmelze eines Asparaginsäure-Phosphats, das durch Erhitzen auf Temperaturen in dem Bereich von 120 bis 260°C, vorzugsweise im Vakuum, thermisch polykondensiert wird. Mit fortschreitender Polykondensation nimmt die Viskosität der Reaktionsmischung zu. Das Ansteigen des Molekulargewichts kann an der Zunahme der Viskosität der Reaktionsmischung verfolgt werden. Durch vorzeitigen Abbruch der Polykondensationsreaktion, z.B. durch Einbringen in Wasser, läßt sich das Molekulargewicht der Kondensate begrenzen. Wenn man die Polykondensation bis zum Ende durchführt, so erhält man homogene, sehr hochviskose Lösungen von Polyaspartimiden in wasserfreier Phosphorsäure.

In analoger Weise erfolgt die Polykondensation der Asparaginsäure und ggf. der anderen Aminosäuren in Polyphosphorsäure. Polyphosphorsäuren entstehen durch Auflösen von Phosphorpentoxid in Phosphorsäure. Eine Aufschlämmung von kristalliner Asparaginsäure in Polyphosphorsäure wird z.B. auf eine Temperatur von 120 bis 250°C erwärmt. Hierbei geht zunächst die Asparaginsäure in Lösung. Diese Lösung wird anschließend - bevorzugt im Vakuum - getempert. Dabei erfolgt die Polykondensation der Asparaginsäure. Die Polykondensation der Asparaginsäure kann auch in Gegenwart von Derivaten der Phosphorsäure durchgeführt werden, z.B. Phosphoroxychlorid, Phosphoroxybromid, Phosphorpentachlorid und Phosphorpentoxid. Außerdem eignen sich Phosphorsäuren, in denen der Phosphor eine niedrigere Oxidationsstufe als +5 aufweist. Zu dieser Gruppe von Säuren gehört beispielsweise die phosphorige Säure, die, bezogen auf 1 Mol Asparaginsäure, in Mengen von 0,05 bis 0,3 Mol bei der Polykondensation eingesetzt wird. Phosphorige Säure kann jedoch auch in Kombination mit Phosphorsäure oder Chlorwasserstoffsäure angewendet werden. So hat sich beispielsweise die Kondensation von Asparaginsäure mit einer Mischung aus 1 Mol Phosphorsäure und 0,05 bis 0,1 Mol phosphoriger Säure pro 1 Mol Asparaginsäure als sehr vorteilhaft erwiesen. Man kann auch Mischungen aus 1 Mol Chlorwasserstoffsäure und 0,05 bis 0,1 Mol phosphoriger Säure pro 1 Mol Asparaginsäure bei der Polykondensation einsetzen. Außerdem eignen sich Derivate der phosphorigen Säure als Hilfsmittel bei der Kondensation, um die bei der Kondensation erforderliche Temperatur zu erniedrigen und die Reaktion zu beschleunigen. Außer der phosphorigen Säure können bei der Kondensation auch Phosphortrichlorid, Phosphortribromid, Triethylphosphit, Diethylchlorphosphit, Ethyldichlorphosphit oder Tetraethylpyrophosphit eingesetzt werden.

Eine weitere Möglichkeit besteht darin, Asparaginsäure in Gegenwart von unterphosphoriger Säure zu kondensieren. Die unterphosphorige Säure wird üblicherweise in Form wäßriger Lösungen verwendet. Pro 1 Mol Asparaginsäure verwendet man 0,05 bis 0,5 Mol unterphosphorige Säure. Die unterphosphorige Säure wird auf der Asparaginsäure homogen verteilt, indem man die Asparaginsäure zusammen mit unterphosphoriger Säure in Wasser löst und die Lösung eindampft. Die unterphosphorige Säure kann auch in Kombination mit Chlorwasserstoffsäure oder Phosphorsäure verwendet werden. Beispielsweise verwendet man eine Mischung aus 1 Mol Phosphorsäure und 0,05 bis 0,1 Mol unterphosphoriger Säure oder eine Mischung von 1 Mol Chlorwasserstoffsäure mit 0,05 bis 0,5 Mol unterphosphoriger Säure pro 1 Mol Asparaginsäure bei der Kondensation. Besonders bevorzugt ist die Herstellung der Kondensate durch Wasserabspaltung aus kristalliner L-Asparaginsäure bei Temperaturen von 180 bis 260°C und die Wasserabspaltung aus L-Asparaginsäure in phosphorsaurem Medium bei 130 bis 220°C.

Geeignete andere anorganische Säuren, die bei der Polykondensation der Asparaginsäure verwendet werden, sind beispielsweise Schwefelsäure, Dischwefelsäure, Schwefeltrioxid, Natrium- und Kaliumhydrogensulfat.

Bei der thermischen Polykondensation der Asparaginsäure fällt das Polykondensat in Form der wasserunlöslichen Polyasparaginsäureimide an. Die Polyaspartimide sind in Phosphorsäure und Dimethylformamid löslich. Sie haben in 1 %iger Lösung in Dimethylformamid K-Werte von 8 bis 70, vorzugsweise 10 bis 45. Die Polyaspartimide bzw. die Cokondensate der Asparaginsäure mit den anderen Aminosäuren können von den nicht umgesetzten Ausgangsstoffen beispielsweise dadurch gereinigt werden, daß man das Kondensationsprodukt zerkleinert und mit der 1- bis 10-fachen Menge an Wasser bei Temperaturen von 0 bis 100°C extrahiert. Dabei lösen sich die nicht umgesetzten Säuren heraus. Polyasparaginsäureimid bzw. die Cokondensate verbleiben als unlöslicher Rückstand. Nicht umgesetzte Asparaginsäure läßt sich durch Extraktion mit 1-N-Salzsäure leicht herauslösen.

Die nicht modifizierten Polyasparaginsäuren werden aus den Polyasparaginsäureimiden vorzugsweise dadurch erhalten, daß man die Polyaspartimide in Wasser aufschlämmt und bei Temperaturen im Bereich von 40 bis 90°C unter Zugabe von Base hydrolysiert und neutralisiert. Diese Reaktionen können selbstverständlich auch bei Temperaturen durchgeführt werden, die unterhalb und oberhalb des oben angegebenen Bereichs liegen. Geeignete Basen sind beispielsweise Natronlauge, Kalilauge, Soda, Kaliumcarbonat, Ammoniak und Amine, wie Trimethylamin, Diethylamin, Ethanolamin, Diethanolamin, Triethanolamin und Morpholin. Die Neutralisation kann auch mit Hilfe von Erdalkalimetallbasen erfolgen, z.B. Calciumhydroxid oder Bariumhydroxid. Die Behandlung der Polyaspartimide erfolgt vorzugsweise bei pH-Werten von 8 bis 10. Hydrolyse und Neutralisation können durch Einwirkung von Ultraschall auf die Reaktionspartner beschleunigt werden. Bei der Behandlung mit Basen erhält man teilweise oder vollständig neutralisierte Polyasparaginsäuren bzw. Kondensate, die mindestens 60 mol% Asparaginsäure und bis zu 40 mol% anderer Aminosäuren einkondensiert enthalten, in Form der Alkali- bzw. Ammoniumsalze. Die Polymeren haben K-Werte (bestimmt nach H. Fikentscher in 1 %iger wäßriger Lösung bei pH 7 und 25°C am Natriumsalz) von 5 bis 150 und vorzugsweise 10 bis 100.

Die Polyasparaginsäuren sowie die Kondensate der Asparaginsäure mit anderen Aminosäuren sind biologisch abbaubar nach OECD Guidelines for testing of chemicals (1981), 302 B (modifizierter Zahn-Wellens-Test). Sie sind auch abbaubar gemäß der Abnahme des gelösten Sauerstoffs im geschlossenen Flaschentest.

Die oben beschriebenen Polyasparaginsäuren und Kondensate der Asparaginsäure mit anderen Aminosäuren eignen sich hervorragend als Komplexbildner in Reinigungsmittelformulierungen, die beispielsweise sauer oder alkalisch eingestellt sein können. Diese Reinigungsmittelformulierungen werden vorzugsweise für die Apparatereinigung in Betrieben der Getränke- und Lebensmittelindustrie eingesetzt. Sie enthalten als Komponente (a) 0,05 bis 30, vorzugsweise 5 bis 15 Gew.-% Polyasparaginsäure, Kondensate der Asparaginsäure, die bis zu 40 Mol-% andere Aminosäuren einkondensiert enthalten, Alkali- und/oder Ammoniumsalze dieser Kondensate und/oder Polyasparaginsäure. Vorzugsweise verwendet man Kondensate der Asparaginsäure, die durch Wasserabspaltung aus kristalliner L-Asparaginsäure bei Temperaturen von 180 bis 260°C erhältlich sind oder Kondensate, die durch Wasserabspaltung aus L-Asparaginsäure in phosphorsaurem Medium bei 120 bis 250°C erhältlich sind. Ein Beispiel für eine saure Reinigungsmittelformulierung ist eine Mischung aus
1 bis 5 Gew.-Teilen Polyasparaginsäure
30 bis 35 Gew.-Teilen Phosphorsäure und
60 bis 69 Gew.-Teilen Wasser.

In der Praxis ist es üblich, z.B. bei der Apparatereinigung in Molkereien, zunächst einen sauren und danach einen alkalischen Reiniger anzuwenden. Als saurer Reiniger wird beispielsweise die oben beschriebene Formulierung verwendet. Die danach verwendete alkalische Reinigerformulierung enthält mindestens eine Verbindung der Komponente (a) in den obengenannten Mengen sowie die im folgenden beschriebenen Komponenten (b) und (c).

Die Reinigungsmittelformulierungen enthalten als Komponente (b) 2 bis 50 Gew.-% Alkalimetallhydroxid wie Natriumhydroxid oder Kaliumhydroxid, Alkalimetallcarbonat, wie Soda oder Kaliumcarbonat oder Natriumsilikat oder Amine. Außerdem eignen sich Mischungen der Hydroxide, Carbonate und Silikate, z.B. Mischungen aus Natriumhydroxid und Soda oder Natriumhydroxid, Soda und Natriumsilikat oder Mischungen aus Natriumhydroxid und Natriumsilikat. Die Komponente (b) ist vorzugsweise zu bis 40 Gew.-%, meistens jedoch nur bis zu 25 Gew.-% in den Reinigungsmittelformulierungen enthalten.

Die Reinigungsmittelformulierungen enthalten als Komponente (c) 1 bis 30, vorzugsweise 2 bis 25 Gew.-% Tenside. Als Tenside können alle üblichen anionischen oder nichtionischen Tenside oder deren Mischungen eingesetzt werden. Vor allem eignen sich Alkylsulfate, Alkylsulfonate, Fettalkoholalkoxylate, Oxoalkoholalkoxylate, Alkylpolyglucoside, Fettaminalkoxylate und Eiweiß/Fettsäurekondensate.

Die Reinigungsmittelformulierungen können gegebenenfalls noch weitere Zusatzstoffe enthalten, z.B. Korrosionsinhibitoren, Desinfektionsmittel zur Erzielung des angestrebten bakteriologischen Reinheitsgrades, Netzmittel, Lösevermittler oder Konservierungsmittel. Die Zusammensetzung der Reinigerformulierungen muß den jeweiligen Anforderungen angepaßt werden. Beispielsweise erfordern unterschiedliche Mengen an Erdalkalimetallionen in Verschmutzungen, die in Apparaturen der Lebensmittel- und Getränkeindustrie entstehen, eine Anpassung der Zusammensetzung der Reinigungsmittelformulierungen innerhalb der oben angegebenen Bereiche für die essentiellen Bestandteile (a) bis (c), wobei in einigen Fällen weitere Zusätze wie Solubilisatoren erforderlich sein können.

Ein bevorzugtes Einsatzgebiet für die beschriebenen Reinigungsmittelformulierungen ist die Apparatereinigung in Molkereien. Bei der Reinigung von Butterfertigern, bei der es hauptsächlich auf die Entfettung ankommt, können sie mit vorteilhafter Wirkung eingesetzt werden. Insbesondere jedoch dort, wo Rückstände oder Beläge aus Calciumphosphat, anderen Calciumsalzen zumeist organischer Säuren und Casein ("Milchstein") zu entfernen sind, also z.B. bei Milch-Plattenerhitzern, Tellereinsätzen von Milchzentrifugen oder Lager- und Transport-Tanks für Milch, eignen sich die Reinigungsmittel, die die Kondensate der Asparaginsäure enthalten, in hervorragender Weise.

Ein weiteres bevorzugtes Einsatzgebiet für die beschriebenen Reinigungsmittelformulierungen ist die Apparatereinigung in Brauereien. Hier sind vor allem Rückstände oder Beläge aus Calciumoxalat, Hopfenharze und Eiweißverbindungen ("Bierstein") zu entfernen, beispielsweise aus Gärtanks, Lagertanks oder Bierleitungen.

Ein weiteres bevorzugtes Einsatzgebiet für die beschriebenen Reinigungsmittelformulierungen ist die Apparatereinigung in der Konservenindustrie. Beim Erhitzen der mit Nahrungsmitteln gefüllten und geschlossenen Blechdosen, üblicherweise in einem Autoklaven, oder bei der Endreinigung von Dosen, z.B. in einer Durchlaufspritzmaschine, müssen Reinigungsmittel mitverwendet werden, die die Reste des Abfüllgutes abwaschen, ohne das Weißblech oder dessen Lackierung anzugreifen. Außerdem soll das Reinigungsmittel verhindern, daß sich Wassersteinbeläge auf den Dosen oder in den Apparaten abscheiden.

Ein weiteres bevorzugtes Einsatzgebiet für die beschriebenen Reinigungsmittelformulierungen ist die Apparatereinigung in der Backwarenindustrie, insbesondere die Reinigung von Back- und Teigformen, welche mit angebrannten Backfett- und Teigresten verunreinigt sind. Die Reinigung geschieht üblicherweise durch Abkochen mit den alkalischen Reinigungslösungen oder durch Waschen in Durchlaufspritzanlagen.

Ein weiteres bevorzugtes Einsatzgebiet für die beschriebenen Reinigungsmittelformulierungen ist die Apparatereinigung in der Zuckerindustrie. Bei der Gewinnung von Saccharose aus Zuckerrüben oder Zuckerrohr fallen Calciumsalze enthaltende Verunreinigungen oder Rückstände an, für deren Entfernung sich die beschriebenen Formulierungen, die Kondensate der Asparaginsäure enthalten, in hervorragender Weise eignen.

Ein weiteres bevorzugtes Einsatzgebiet für die beschriebenen Reinigungsmittelformulierungen ist die Apparatereinigung in der fettverarbeitenden Industrie, die aus Fetten tierischen oder pflanzlichen Ursprungs vor allem Schmalz, Talg, Speiseöle oder durch katalytische Hydrierung gehärtete Fette oder fette Öle, z.B. Margarine, erzeugt. Derartige Produkte stellen neben ihrer Bedeutung auf dem Nahrungsmittelbereich auch wichtige Rohstoffe für die Herstellung von Produkten zur Textilveredlung, von Anstrichmitteln, Lederpflegemitteln, kosmetischen Präparaten, Kerzen, Seifen, Tensiden, Schmierstoffen, Weichmachern, Zementund Asphaltzusätzen sowie von Kunststoffen dar.

Ein weiteres bevorzugtes Einsatzgebiet für die beschriebenen Reinigungsmittelformulierungen ist die Apparatereinigung in der fleischverarbeitenden Industrie. Hier müssen insbesondere wassersteinverhütende Reinigungsmittel eingesetzt werden, z.B. in den sog. Dampfstrahl-Reinigungsgeräten, bei denen ein heißes Dampf-Flüssigkeits-Gemisch auf die zu reinigenden Apparate und Geräte gestrahlt wird.

Die erfindungsgemäß zu verwendenden Kondensate der Asparaginsäure eignen sich vor allem deshalb so gut für die beschriebenen Anwendungszwecke, weil sie außerordentlich effektive Komplexbildner für Erdalkalimetallionen, insbesondere für Calciumionen, darstellen. Ihr Calcium-Bindevermögen ist außergewöhnlich hoch. Weitere Vorteile sind ihre gute biologische Abbaubarkeit und ihr sehr geringes Toxizitätspotential, was insbesondere auf dem Getränke- und Lebensmittelsektor von Bedeutung ist.

Im Zusammenhang mit der guten biologischen Abbaubarkeit der Kondensate der Asparaginsäure ist es auch sehr vorteilhaft, daß die diese Verbindungen enthaltenden alkalischen Reinigungsmittelformulierungen weitgehend frei von organischen Lösungsmitteln zum Einsatz gebracht werden können. Somit wird eine mögliche Umweltbelastung noch weitgehender ausgeschlossen.

Die K-Werte der neutralisierten Polykondensate wurden nach H. Fikentscher, Cellulose-Chemie, Bd. 13, 58-64 und 71 bis 74 (1932) in wäßriger Lösung bei einer Temperatur von 25°C und einer Konzentration von 1 Gew.-% bei pH 7 am Natriumsalz der Polyasparaginsäuren bestimmt.

Die K-Werte der Polyaspartimide wurden in 1 %iger Lösung in Dimethylformamid bei 25°C bestimmt. Die %-Angaben in den Beispielen bedeuten Gew.-%, die Teile sind Gew.-Teile.

### Beispiele

### Herstellung von Polyasparaginsäure

L-Asparaginsäure wird bei einer Temperatur von 150°C mit Phosphorsäure im Molverhältnis 1 : 1 innerhalb von 1,5 Stunden kondensiert. Nach dem Entfernen der Phosphorsäure wird das Polyaspartimid durch Eintragen in wäßrige Natriumlauge zu einer 40 %igen wäßrigen Lösung des Natriumsalzes der Polyasparaginsäure verarbeitet. Die Polyasparaginsäure hat in Form des Na-Salzes in 1 gew.-%iger wäßriger Lösung bei pH 7 einen K-Wert von 38,7.

### Beispiele

### Beispiel 1

### Hochalkalische Reinigungsmittelformulierung für Molkereien

Eine Mischung aus
40 Teilen 50 %iger wäßriger Natronlauge,
15 Teilen einer 40 %igen wäßrigen Lösung von Polyasparaginsäure,
4 Teilen eines C₁₀-oxoalkoholethoxylates mit einem Ethoxylierungsgrad von ca. 3 bis 6,
4 Teilen einer handelsüblichen Alkylcarbonsäure-Mischung als Lösevermittler,
7 Teilen Natriumgluconat zum Abbau der Wasserhärte und
30 Teilen Wasser
wurde bei der Entfernung von Ablagerungen aus Milchstein, der im wesentlichen aus Calciumphosphat, Eiweiß und anderen Komponenten besteht, eingesetzt. Die Ablagerungen ließen sich problemlos entfernen.

### Beispiel 2

### Hochalkalische Reinigungsmittelformulierung für Brauereien

Eine Mischung aus
40 Teilen 50 %iger wäßriger Kalilauge,
15 Teilen einer 40 gew.-%igen wäßrigen Lösung von Polyasparaginsäure,
eines C₁₀-oxoalkoholethoxylates mit einem Ethoxylierungsgrad von ca. 1 bis 6,
3 Teilen einer handelsüblichen Alkylcarbonsäure-Mischung als Lösevermittler und
39 Teilen Wasser
wurde bei der Entfernung von Ablagerungen aus Calciumoxalat, Hopfenharzen und Eiweiß eingesetzt. Die Ablagerungen ließen sich problemlos entfernen.

### Vergleichsbeispiel 1

Beispiel 1 wurde mit der einzigen Ausnahme wiederholt, daß man Polyasparaginsäure durch das Na-Salz der Ethylendiamintetraessigsäure (EDTA) ersetzte. Die Ablagerungen wurden zwar ebenfalls entfernt, jedoch ist EDTA nicht biologisch abbaubar.

### Vergleichsbeispiel 2

Beispiel 1 wurde mit der Ausnahme wiederholt, daß man Polyasparaginsäure durch das Na-Salz der Nitrilotriessigsäure ersetzte. Die Ablagerungen aus Milchstein konnten nicht vollständig entfernt werden.

## Patentansprüche

1. Verwendung von Polyasparaginsäure und Kondensaten der Asparaginsäure, die bis zu 40 Mol-% andere Aminosäuren einkondensiert enthalten, sowie den Alkali- und Ammoniumsalzen dieser Kondensate und der Polyasparaginsäure in Reinigungsmittelformulierungen für die Apparatereinigung in Betrieben der Getränke- und Lebensmittelindustrie.

2. Verwendung nach Anspruch 1, dadurch gekennzeichnet, daß man Kondensate einsetzt, die durch Wasserabspaltung aus kristalliner L-Asparaginsäure bei Temperaturen von 180 bis 260°C erhältlich sind.

3. Verwendung nach Anspruch 1, dadurch gekennzeichnet, daß man Kondensate einsetzt, die durch Wasserabspaltung aus L-Asparaginsäure in phosphorsaurem Medium bei 120 bis 250°C erhältlich sind.

4. Wäßrige Reinigungsmittelformulierungen für die Apparatereinigung in Betrieben der Getränke- und Lebensmittelindustrie, dadurch gekennzeichnet, daß die Formulierungen
(a) 0,05 bis 30 Gew.-% Polyasparaginsäure, Kondensate der Asparaginsäure, die bis zu 40 Mol-% andere Aminosäuren einkondensiert enthalten, Alkali- und Ammoniumsalzen dieser Kondensate und/oder Polyasparaginsäure,
(b) 2 bis 50 Gew.-% Alkalimetallhydroxid, -carbonat, -silikat oder deren Mischungen und
(c) 1 bis 30 Gew.-% Tenside
enthalten.

## Claims

1. The use of polyaspartic acid and condensates of aspartic acid containing up to 40 mol% of other amino acids in cocondensed form and also of the alkali metal and ammonium salts of these condensates and of polyaspartic acid in cleaning agent formulations for equipment cleaning in production facilities of the beverage and food industry.

2. A use as claimed in claim 1, characterized in that the condensates used are obtainable by elimination of water from crystalline L-aspartic acid at temperatures from 180 to 260°C.

3. A use as claimed in claim 1, characterized in that the condensates used are obtainable by elimination of water from L-aspartic acid in a phosphoric acid medium at from 120 to 250°C.

4. Aqueous cleaning agent formulations for equipment cleaning in production facilities of the beverage and food industry, characterized in that the formulations comprise
(a) from 0.05 to 30% by weight of polyaspartic acid, condensates of aspartic acid containing up to 40 mol% of other amino acids in cocondensed form, alkali metal and ammonium salts of these condensates and/or polyaspartic acid,
(b) from 2 to 50% by weight of alkali metal hydroxide, carbonate, silicate or mixtures thereof, and
(c) from 1 to 30% by weight of surfactants.

## Revendications

1. Utilisation d'acide polyaspartique et de produits de condensation de l'acide aspartique qui contiennent à l'état condensé jusqu'à 40% en moles d'autres acides aminés, ainsi que des sels de métal alcalin et d'ammonium de ces produits de condensation et de l'acide polyaspartique, dans des compositions de produits de lavage pour le nettoyage d'appareils dans des usines de l'industrie des boissons et des denrées alimentaires.

2. Utilisation selon la revendication 1, caractérisée en ce que l'on utilise des produits de condensation qui sont obtenus par élimination d'eau à partir d'acide L-aspartique cristallin à des températures de 180 à 260°C.

3. Utilisation selon la revendication 1, caractérisée en ce que l'on utilise des produits de condensation qui sont obtenus par élimination d'eau à partir d'acide L-aspartique en milieu d'acide phosphorique à des températures de 120 à 250°C.

4. Compositions aqueuses de produits de lavage pour le nettoyage d'appareils dans des usines de l'industrie des boissons et des denrées alimentaires, caractérisées en ce qu'elles contiennent
a) 0,05 à 30% en poids d'acide polyaspartique, de produits de condensation de l'acide aspartique qui contiennent à l'état condensé jusqu'à 40% en moles d'autres acides aminés, de sels de métal alcalin et d'ammonium de ces produits de condensation et/ou d'acide polyaspartique,
b) 2 à 50% en poids d'hydroxyde, carbonate, silicate de métal alcalin ou de mélanges de ceux-ci et
c) 1 à 30% en poids de tensio-actifs.
